(19) Europäisches Patentamt
European Patent Office
Office européen des brevets

(11) EP 1 389 605 A1

(12) **EUROPEAN PATENT APPLICATION**
published in accordance with Art. 158(3) EPC

(43) Date of publication:
**18.02.2004 Bulletin 2004/08**

(21) Application number: **02720603.6**

(22) Date of filing: **25.04.2002**

(51) Int Cl.[7]: **C07B 57/00**, G01N 30/48

(86) International application number:
**PCT/JP2002/004161**

(87) International publication number:
**WO 2002/088049 (07.11.2002 Gazette 2002/45)**

(84) Designated Contracting States:
**AT BE CH CY DE DK ES FI FR GB GR IE IT LI LU MC NL PT SE TR**

(30) Priority: **27.04.2001 JP 2001131943**

(71) Applicant: **Daicel Chemical Industries, Ltd.**
**Sakai-shi, Osaka 590-8501 (JP)**

(72) Inventors:
- **OKAMOTO, Yoshio**
  **Nagoya-shi, Aichi 461-0042 (JP)**
- **YAMAMOTO, Chiyo**
  **Kasugai-shi, Aichi 480-0304 (JP)**

(74) Representative: **Grünecker, Kinkeldey,**
**Stockmair & Schwanhäusser Anwaltssozietät**
**Maximilianstrasse 58**
**80538 München (DE)**

(54) **SEPARATORY AGENT FOR OPTICAL ISOMER**

(57) The invention provides a separating agent for enantiomeric isomers which has the characteristic ability to identify asymmetry. The separating agent includes as an effective component an aromatic polysaccharide derivative having a $C_{10}$ or higher alkoxy group as a substituent on the aromatic group.

EP 1 389 605 A1

## Description

Technical Field to which the Invention belongs

The present invention relates to a separating agent for enantiomeric isomers, in particular a separating agent for enantiomeric isomers that is used preferably for chromatography. The present invention provides a technology for analyzing enantiomeric isomers, which performs optical resolution of a wide variety of chiral compounds with high separation coefficient in the analyses of, in particular, medicines, foods, agricultural chemicals, and perfumes.

Prior Art

Many organic compounds have enantiomeric isomers that have the same physical properties such as physical and chemical properties, for example, boiling point, melting point, and solubility but have a difference in physiological properties. This is because proteins and glucides by themselves that constitute an organism in most cases are composed of one enantiomeric isomer and there arises a difference in the manner of action on the other enantiomeric isomer and thus a difference in physiological activity arises. In particular, in the field of medicine, it is often the case that enantiomeric isomers have a significant difference in efficacy or toxicity. For this reason, the Ministry of Health, Labour and Welfare of Japan prescribes in the Guideline for the Production of Medicines that "in the case where the drug is a racemic form, it is desirable that the dynamic behaviors of absorption, distribution, metabolism and excretion be made on each isomer".

As described above, since the physical properties such as physical and chemical properties, for example, the boiling point, melting point, and solubility of the enantiomeric isomers are quite the same, they cannot be analyzed by the ordinary separation means. Accordingly, studies on the technology of analyzing a wide variety of enantiomeric isomers simply and with high precision have been intensively made. As an analytical technique in response to these requirements, an optical separation method by high performance liquid chromatography (HPLC), in particular an optical separation method by a chiral column for HPLC has been advanced. The chiral column as used herein is an asymmetry identifying agent by itself or a chiral immobilizing phase including an asymmetry identifying agent used as carried on a suitable carrier.

For example, optically active poly(triphenylmethyl methacrylate) (JP 57-150432 A), cellulose, and amylose derivative (Y. Okamoto, M. Kawashima and K. Hatada, J. Am. Chem. Soc., 106, 5337, 1984), and ovomucoid (JP 63-307829 A), which is a protein, have been developed. Among the many chiral immobilizing phases for HPLC, optical resolution columns that carry cellulose or an amylose derivative on silica gel are known to have high asymmetry identifying ability for a very wide variety of compounds. In recent years, studies have been advanced on preparative liquid chromatography for an optically active substance on an industrial scale by using a chiral immobilizing phase for HPLC and a simulated moving bed chromatography in combination (Phram Tech Japan, 12, 43 (1996)), and not only to fully separate but also to increase the productivity of preparative chromatography, a chiral immobilizing phase has been demanded that performs further improved separation of the target compound of preparative separation, that is, has a greater value of separation coefficient $\alpha$. Studies for finding out polysaccharide derivatives eachhavinga large $\alpha$ value andhighasymmetry identifying ability have been made energetically.

Also, recently, as a separation and analysis method that is environmentally friendly, enantiomeric isomer separation in the field of a reverse phase condition-specified enantiomeric isomer separation and capillary electrophoresis (CE) aimed at using an aqueous moving phase or using a trace amount of a moving phase has received high much attention and separating agents having a high asymmetry identifying ability have been desired in these fields.

Disclosure of the Invention

The inventors of the present invention have made extensive research on a separating agent for enantiomeric isomers having unique asymmetry identifying ability and thus achieved the present invention.

That is, the present invention relates to a separating agent for enantiomeric isomers, including as an effective component an aromatic polysaccharide derivative having a long-chain alkoxy group having at least 10 carbon atoms as a substituent on the aromatic group.

The present invention provides use of an aromatic polysaccharide derivative having as a substituent on the aromatic group a long-chain alkoxy group having at least 10 carbon atoms as a separating agent for enantiomeric isomers and a method of separating enantiomeric isomers with an aromatic polysaccharide derivative having as the substituent on the aromatic group a long-chain alkoxy group having at least 10 carbon atoms.

Detailed Description of the Invention

Description will now be made of embodiments of the present invention.

As a polysaccharide that constitutes an aromatic polysaccharide derivative having used in the present invention, any synthetic polysaccharide, any natural polysaccharide, and any modified natural polysaccharide may be used so long as they have an optical activity. Those which have a high regularity in the binding form are more desired. There are exemplified β-1,4-glucan (cellulose), α-1,4-glucan (amylose, amylopectin), α-1,6-glucan (dextran), β-1,6-glucan (busturan), β-1,3-glucan (for example, cardran, schizophyllan, etc.), α-1,3-glucan, β-1,2-glucan (Crown Gall polysaccharide), β-1,4-galactan, β-1,4-mannan, α-1,6-mannan, β-1,2-fructan (inulin), β-2,6-fructan (levan), β-1,4-xylan, β-1,3-xylan, β-1,4-chitosan, α-1,4-N-acetylchitosan (chitin), pullulan, agarose, alginic acid, and the like. Also, the polysaccharide includes starch containing amylose. Among those, cellulose, amylose, β-1,4-xylan, β-1,4-chitosan, chitin, β-1,4-mannan, inulin, and cardran, which are readily available as the polysaccharide having high purity, are preferred. Cellulose and amylose are particularly preferred.

These polysaccharides have a number-average degree of polymerization (an average number of pyranose rings or furanose rings contained in one molecule) of at least 5, preferably at least 10, or preferably 1,000 or less in view of ease of handling, though there is no particular limitation in the upper limit thereof.

In the present invention, the aromatic polysaccharide derivative is a compound being combined with an aromatic compound having a functional group being reactive with part or all of the hydroxyl groups of the polysaccharide through an ester bond, an urethane bond or an ether bond.

Here, examples of the aromatic compound having a functional group that is reactive with a hydroxyl group include aromatic carboxylic acid derivatives, such as aromatic carboxylic acids, chlorides, anhydrides, or esters thereof or aromatic isocyanic acids, each having a long-chain alkoxy group having at least 10, preferably 10 to 30 carbon atoms as a substituent on the aromatic ring. The long-chain alkoxy group is preferably a linear alkoxy group having no branching.

Further, an aromatic ester group or a carbamate group formed by the reaction of a polysaccharide with an aromatic carboxylic acid, an aromatic carboxylic acid derivative or an aromatic isocyanic acid, each having a long-chain alkoxy group having as a substituent at least 10 carbon atoms, is preferably at least 0.1 per 1 glucose unit. The aromatic polysaccharide derivatives of the present invention are preferably ester derivatives or carbamate derivatives of polysaccharides having such an ester group or carbamate group, with ester derivatives being particularly preferable.

The aromatic polysaccharide derivatives of the present invention having a long-chain alkoxy group having at least 10 carbon atoms can form an obj ective separating agent for enantiomeric isomers by any one of a method of carrying on a carrier described below and a method of pulverizing or forming the aromatic polysaccharide derivative by itself into beads.

The carrying as used herein means that the polysaccharide derivative is immobilized on a carrier and the method of immobilization is physical adsorption between the polysaccharide derivative and the carrier, chemical bond between the polysaccharide derivative and the carrier, chemical bond between the polysaccharide derivatives, chemical bond of the polysaccharide derivative to a third component, light irradiation to the polysaccharide derivative, radical reaction and the like; any one of the methods may be used. Further, the carrier as used herein includes porous organic carriers and porous inorganic carriers, preferably porous organic carriers. Suitable examples of the porous organic carrier include polymer substances such as polystyrene, polyacrylamide, and polyacrylate. Suitable examples of the porous inorganic carrier include silica, alumina, magnesia, glass, kaolin, titanium oxide, silicates, and hydroxyapatite. A particularly preferred carrier is silica gel. The silica gel has a particle size of 0.1 μm to 10 mm, preferably 1 μm to 300 μm and an average pore diameter of 10 Å to 100 μm, preferably 50 Å to 50, 000 Å. The surface of the silica gel is desirably surface treated in order to remove the influence of the remaining silanol. However, there arises no problem if no surface treatment is practiced.

The carrying amount of the aromatic polysaccharide derivative on the carrier is preferably 1 to 100 parts by weight, particularly 5 to 60 parts by weight, based on the carrier.

The method of pulverizing or forming into a spherical shape the aromatic polysaccharide derivative having a long-chain alkoxy group having at least 10 carbon atoms may be any conventionally known method. The obtained pulverized or spherical polysaccharide derivative may be used as it is or may be sieved and classified into an even particle size.

The separating agent for enantiomeric isomers of the present invention is useful as a chiral immobilizingphase for chromatography and generally used in chromatographic methods such as a gas chromatographic method, a liquid chromatographic method, a thin layer chromatographic method, a capillary electrophoretic method, and a continuous preparative liquid chromatographic method.

It is preferred that the separating agent of the present invention is used as an immobilizing phase for liquid chromatography, in particular liquid chromatography with water, alcohol, acetonitrile or mixtures of these as the moving phase; an immobilizing phase for thin layer chromatography; as an asymmetry identifying agent to add to an electrophoretic liquid or fill in a capillary in a capillary electrophoretic method such as a micelle electroconductive chromatographic method or a capillary electrochromatographic method; or as an immobilizing phase for a continuous preparative liquid chromatographic method such as a simulated moving bed chromatography.

The aromatic polysaccharide derivative of the present invention can be applied not only as a separating agent for chromatography but also as a host-guest separating agent, membrane separation, and a liquid crystal material, utilizing self-agglomeration of a side-chain long-chain alkoxy group.

Effect of the invention

According to the present invention, the separating agent for enantiomeric isomers having high asymmetry identifying ability, in particular, for hydrophobic compounds can be provided.

Examples

The present invention will be described in detail by Examples. However, the present invention should not be considered as being limited to these Examples.

Example 1 Production method for cellulose tris[3',4',5'-tri(dodecan-1-yloxy)benzoate]-carried type filler and method of fabricating a column filled therewith

[1] Synthesis of ethyl 3,4,5-trihydroxybenzoate (2)

In a flask was charged 15.1 g of 3,4,5-trihydroxybenzoic acid (1), and 160 ml of ethanol and 5 ml of sulfuric acid were added thereto in the order cited and heating with stirring was performed for 40 hours under reflux. Thereafter, the solvent was distilled off, the residue was extracted with ether and the organic layer was dried over magnesium sulfate. After the magnesium sulfate was filtered off, and the organic solvent was evaporated to afford a white solid (2) (yield of the reaction: 17.6 g, percent yield:47.2%).

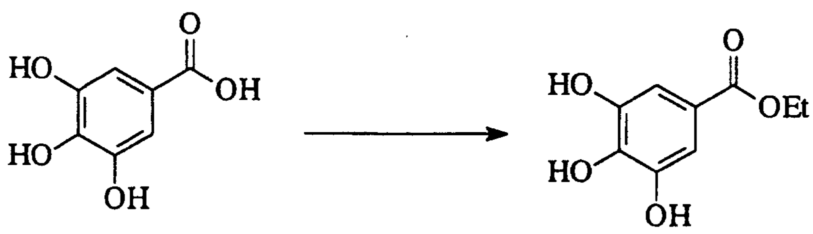

(1) (2)

[2] Synthesis of ethyl 3,4,5-tri(dodecan-1-yloxy)benzoate (3)

Under nitrogen atmosphere, 7.21 g of (2) and 9.45 g of anhydrous potassium carbonate were charged in a flask and 24 ml of bromododecane and 30 ml of N, N-dimethylformamide (DMF) were added thereto, followed by heating with stirring at 70°C for 40 hours. Thereafter, ice water was added thereto, the precipitate formed was recovered and recrystallized from acetone to afford a white solid (3) (yield: 16.1 g, percent yield: 69.5%).

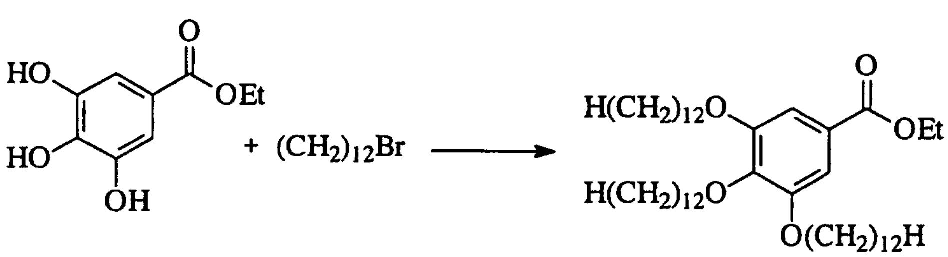

(2) (3)

[3] Synthesis of 3,4,5-tri(dodecan-1-yloxy)benzoic acid (4)

Under nitrogen atmosphere, 5.22 g of potassium hydroxide and 100 ml of ethanol were added to 10.0 g of (3), and refluxed at 80°C over one night, and then left to cool, and hydrochloric acid was added to the reaction mixture. When the reaction mixture turned acidic, the mixture was extracted with ether. After the ether had been evaporated, the residue was recrystallized from acetone to afford a white solid (4) (yield: 8.65 g, percent yield: 91.7%).

The organic layer was dried over magnesium sulfate, the magnesium sulfate was filtered out and the organic solvent was evaporated to obtain a white solid (2).

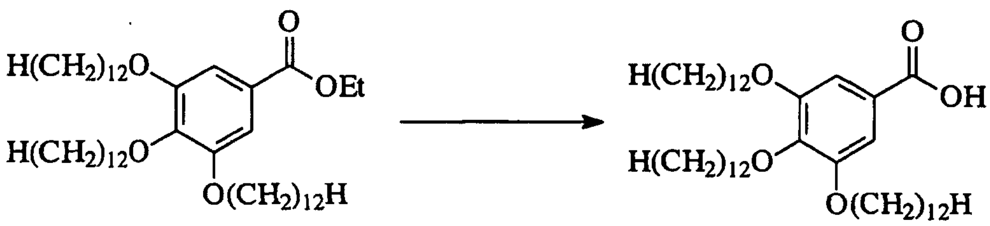

(3) (4)

[4] Synthesis of 3,4,5-tri(dodecan-1-yloxy)benzoyl chloride (5)

Under nitrogen atmosphere, into a flask 4.30 g of (4) and 4 ml of thionyl chloride were charged, and the mixture was refluxed at 80°C for 20 hours. Thereafter, the thionyl chloride was distilled off to afford a whitish yellow solid (5) (yield: 4.36 g, percent yield: 98.7%).

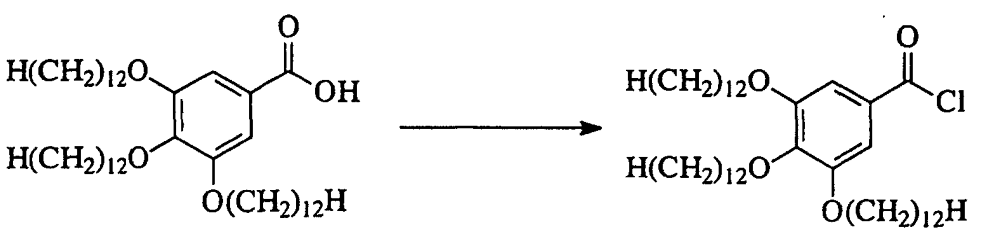

(4) (5)

[5] Synthesis of cellulose tris[3',4',5'-tri(dodecan-1-yloxy)benzoate] (6)

Under nitrogen atmosphere, 0.26 g of cellulose (trade name: Avicell, manufactured by Merck Co.), 4.36 g of (5), and 5.4 ml of dry pyridine were charged in a flask and heating at 80°C for 15 hours with stirring was performed. Thereafter, the reaction mixture was poured into a mixed solution of methanol : water = 4:1 (v/v) to afford a pale yellow solid (6) (yield: 3.08 g, percent yield: 90.1%). The elemental analytical values of the obtained cellulose tris[3',4',5'-tri (dodecan-1-yloxy)benzoate] (6) are shown in Table 1.

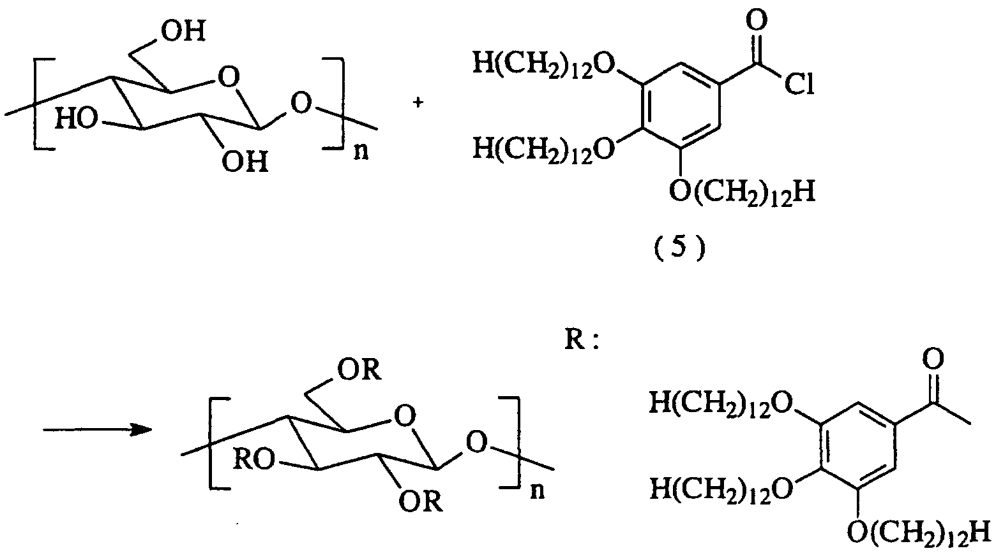

(5)

R :

(6)

Table 1

| Results of Elemental Analysis of Cellulose Tris[3',4'5'-tri(dodecan-1-yloxy)benzoate] (6) | | | |
|---|---|---|---|
| | C(%) | H(%) | N(%) |
| Calculated | 76.01 | 11.24 | 0.00 |
| Found | 75.98 | 10.98 | 0.11 |

[6] Fabrication of a filler carrying cellulose tris[3',4',5'-tri(dodecan-1-yloxy)benzoate] (6)

1.0 g of the cellulose ester derivative (6) obtained in [5] was dissolved in 10 ml of chloroform. The chloroform solution of the cellulose ester derivative (6) was uniformly perfused to 4.0 g of silica gel (particle diameter of 7 μm) treated with aminopropylsilane, and then the solvent was distilled off to fabricate a filler carrying cellulose tris[3',4',5'-tri(dodecan-1-yloxy)benzoate] (6).

[7] Fabrication of a column filled with cellulose tris[3',4',5'-tri(dodecan-1-yloxy)benzoate] (6)-carried type filler

The carried type filler fabricated in [6] was pressed and filled into a stainless steel-made column of ϕ 0.20 cm × L 25 cm by a slurry filling method to fabricate a separation column for enantiomeric isomers.

Application Example 1

By using the separation column for enantiomeric isomers fabricated in Example 1, evaluation of the asymmetry identifying ability (α value) of hexahelicene represented by the formula (I) was preformed by a liquid chromatographic method under the condition (1) described below. As comparisons, by using a commercially available cellulose tribenzoate-carried type separation column for enantiomeric isomers (CHIRALCEL (registered trademark) OB, manufactured by Daicel Chemical Industries, Ltd.; ϕ 0.46 cm × L 25 cm) , and a cellulose triacetate-carried type separation column for enantiomeric isomers (CHIRALCEL (registered trademark) OA, manufactured by Daicel Chemical Industries, Ltd.; ϕ 0.46 cm × L 25 cm) each using as an asymmetry identifying agent a cellulose ester-based derivative, evaluation of the asymmetry identifying ability (α value) of hexahelicene was preformed by liquid chromatographic methods under the conditions (2) and (3), respectively, described below. The results are shown in Table 2.

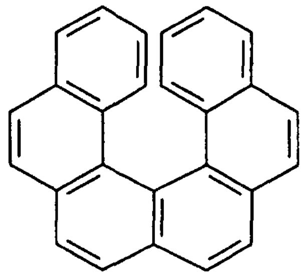

(I)

Analysis condition (1) moving phase: methanol, flow rate: 0.2 ml/min, temperature: 25°C
Analysis condition (2) moving phase: ethanol, flow rate: 0.5 ml/min, temperature: 25°C
Analysis condition (3) moving phase: water/ethanol=50/50 (v/v), flow rate: 0.5 ml/min, temperature: 25°C

Note that the holding coefficient (k') and separation coefficient (α) shown in table are defined by the following formulae.
Holding coefficient;

k' = [(Holding time of enantiomer) - (dead time)]/dead time

Separation coefficient;

α = (Holding coefficient of an enantiomer held relatively strongly)/(holding coefficient of an enantiomer held relatively weakly)

On this occasion, the dead time defined was an elution time of tri-tert-butylbenzene.

Table 2

| | Holding coefficient ($k_1$') and separation coefficient (α) | | |
|---|---|---|---|
| Separating agent / Racemic form | Example 1 Analysis condition (1) | Analysis condition (2) of CHIRALCEL (registered trademark) OB | Analysis condition (3) of CHIRALCEL (registered trademark) OA |
| Hexahelicene | $k_1$'=1.85, α=1.93 | $k_1$'=1.35, α=1.00 | $K_1$'=5.93, α=1.34 |

Application Example 2

By using the separation column for enantiomeric isomers fabricated in Example 1, evaluation of the asymmetry identifying ability (α value) of Trueger's base represented by the formula (II) was performed by a liquid chromatographic method under the condition described below. As a comparison, by using the separating agent carrying cellulose tris-p-octyloxybenzoate prepared by the method described in JP 60-142930 A, evaluation of the asymmetry identifying ability (α value) was performed similarly. The results are shown in Table 3.

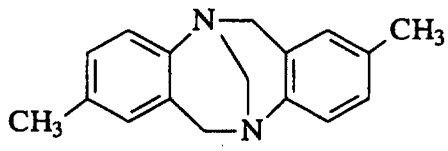

(II)

Analysis condition moving phase: hexane/isopropanol=90/10 (v/v), flow rate: 0.5 ml/min, temperature: 25°C, detection: 254 nm

Table 3

| Separating agent / Racemic form | Separation coefficient (α) | |
|---|---|---|
| | Example 1 | Comparative preparation |
| Treuger's base | α=2.07 | α=1.37 |

## Claims

1. A separating agent for enantiomeric isomers, comprising, as an effective component, an aromatic polysaccharide derivative having a long-chain alkoxy group having at least 10 carbon atoms as a substituent on the aromatic group.

2. The separating agent according to claim 1, wherein the aromatic polysaccharide derivative is an ester derivative or a carbamate derivative of cellulose or amylose.

3. The separating agent according to claim 1 or 2, wherein the long-chain alkoxy group is a linear alkoxy group having no branching.

4. The separating agent according to any one of claims 1 to 3, wherein the separating agent is used as a chiral immobilizing phase for chromatography.

5. The separating agent according to claim 4, wherein the chiral immobilizing phase for chromatography is used under condition where water, alcohol, acetonitrile or a mixture thereof is used as a moving phase.

6. The separating agent according to claim 4, wherein the chiral immobilizing phase for chromatography is added in an electrophoretic solution in a capillary electrophoresis or is an asymmetry recognition solution filled in a capillary.

7. The separating agent according to claim 4, wherein the chiral immobilizing phase for chromatography is an immobilizing phase for a continuous preparative liquid chromatography.

| International application No. |
|---|
| PCT/JP02/04161 |

**A. CLASSIFICATION OF SUBJECT MATTER**

Int.Cl[7] C07B57/00, G01N30/48

According to International Patent Classification (IPC) or to both national classification and IPC

**B. FIELDS SEARCHED**

Minimum documentation searched (classification system followed by classification symbols)

Int.Cl[7] C07B57/00, G01N30/48, B01J20/24

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6-211902 A (Daicel Chemical Industries, Ltd.), 02 August, 1994 (02.08.94), (Family: none) | 1-7 |
| A | JP 6-93002 A (Daicel Chemical Industries, Ltd.), 05 April, 1994 (05.04.94), (Family: none) | 1-7 |

☐ Further documents are listed in the continuation of Box C. ☐ See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 26 June, 2002 (26.06.02) | 09 July, 2002 (09.07.02) |
| Name and mailing address of the ISA/ Japanese Patent Office | Authorized officer |
| Facsimile No. | Telephone No. |

Form PCT/ISA/210 (second sheet) (July 1998)